# EUROPÄISCHE PATENTSCHRIFT

(11) **EP 3 738 810 B1**
(45) Veröffentlichungstag und Bekanntmachung des Hinweises auf die Patenterteilung: **03.11.2021**
(21) Anmeldenummer: 19174646.0
(22) Anmeldetag: 15.05.2019
(51) Int. Cl.: B60K 15/035, B60K 15/04

(54) **ENTLÜFTUNGSVORRICHTUNG ZUR ENTLÜFTUNG EINES KRAFTFAHRZEUGTANKS**
VENTING DEVICE FOR VENTING OF MOTORVEHICLE TANKS
DISPOSITIF D'AÉRATION D'UN RÉSERVOIR DE VÉHICULE AUTOMOBILE

(43) Veröffentlichungstag der Anmeldung: 18.11.2020
(73) Patentinhaber: Magna Energy Storage Systems GesmbH, 8261 Sinabelkirchen (AT)
(72) Erfinder: WIEDNER, Patrick Michael, 8230 Hartberg (AT); STEINMANN, Dominik, 8223 Stubenberg (AT); KULMER, Karl-Heinz, 8200 Gleisdorf (AT)
(74) Vertreter: Zangger, Bernd

(56) Entgegenhaltungen:
- DE-A1- 19 605 922
- DE-A1-102009 057 860
- DE-U1-202008 001 586
- US-A- 4 934 417
- US-A1- 2002 189 691

## Beschreibung

### Gebiet der Erfindung

Die vorliegende Erfindung betrifft eine Entlüftungsvorrichtung zur Entlüftung eines Kraftfahrzeugtanks.

### Stand der Technik

Es ist bekannt, Kraftfahrzeugtanks, also Tanks in Kraftfahrzeugen, insbesondere Tanks für den Kraftstoff zum Antreiben des Kraftfahrzeugs wie Benzin oder Dieselkraftstoff, während des Betriebs des Kraftfahrzeuges durch eine Betriebsentlüftung zu entlüften. Die Betriebsentlüftung erfolgt in der Regel an einem oder an mehreren höchsten Punkten des Kraftfahrzeugtanks. Das abgeführte Gas kann in ein Kraftstoffdampffilter, insbesondere ein Aktivkohlefilter, geleitet werden, um möglichst wenig Kohlenwasserstoffe in die Umwelt abzugeben. Für die Betankung des Kraftfahrzeugtanks kann eine eigene Betankungsentlüftung vorgesehen sein, wobei auch das bei der Betankungsentlüftung abgegebene Gas in das Aktivkohlefilter geleitet wird.

Zur Vermeidung von Schäden am Aktivkohlefilter ist es bekannt, den in den Entlüftungsleitungen strömenden Kraftstoffdampf über einen Flüssigkeitsabscheider zu trennen, so dass Flüssigkeit abgeschieden wird und wieder in den Tank zurückfließen kann und nur Gas zum Aktivkohlefilter gelangt. Solche Flüssigkeitsabscheider können in den Entlüftungsleitungen in Form eigener Zwischenbehälter angeordnet sein. In jüngerer Zeit ist es auch bekannt Flüssigkeitsabscheider direkt in einem Anschlussnippel des Einfüllrohrs auszubilden, so dass abgeschiedenen Flüssigkeit direkt in das Einfüllrohr gelangen kann und über das Einfüllrohr abfließen kann. Derartige Abscheidenippel benötigen nur einen geringen Bauraum und die abgeschiedene Flüssigkeit kann leicht abgeführt werden.

Aus der EP 1955888 A2 ist ein Flüssigkeitsdampfabscheider für das Kraftstoffsystem eines Fahrzeugs bekannt, wobei der Flüssigkeitsdampfabscheider einen Körper mit einem Einlass umfasst, der mit einem Entlüftungssystem eines Kraftstofftanks verbindbar ist, und mit einem Dampfauslass, der mit einer Kraftstoffdampfbehandlungsvorrichtung verbindbar ist, und einen Kondensationsraum zur Kondensation von Kraftstofftröpfchen, wobei der Kondensationsraum mit dem Einlass und dem Auslass in Strömungsverbindung steht, im Kondensationsraum ein Tröpfchenabscheider angeordnet ist, der eine Trennwand umfasst und sich der Kondensationsraum an einem Einfüllstutzen des Kraftstoffsystems erstreckt.

Während des Fahrbetriebs, sowie auch im Zuge von sogenannten Sofortentlüftungen, zum Beispiel zum sofortigen Druckabbau nach Betätigung einer Tankklappenentriegelung eines Hybridfahrzeuges, kann es zu hohen Gasvolumenströmungen im Entlüftungssystem kommen, die auch eine hohe Sättigung an flüssigem Kraftstoff aufweisen können.

Bekannte Abscheidenippel am Einfüllrohr kommen kaum mit solchen höheren Gasvolumenströmen zurecht, insbesondere auf Grund des geringen Arbeitsvolumens derartiger Abscheider. Ein zu niedriger Abscheidegrad kann jedoch eine erhöhte Belastung oder sogar eine Zerstörung des Kraftstoffdampffilters, insbesondere Aktivkohlefilters, bewirken.

Aus der DE 10 2009 057860 A1 ist ein Kraftstoffbehälter bekannt, mit wenigstens einem einen Betankungskanal umschließenden Einfüllrohr mit wenigstens einer Entlüftungsleitung, die wenigstens einen ersten und einen zweiten Leitungsabschnitt umfasst, wobei der erste Leitungsabschnitt sich von einem Entlüftungsanschluss des Kraftstoffbehälters zu einem Anschluss am Einfüllrohr und der zweite Leitungsabschnitt sich von einem Anschluss an dem Einfüllrohr zu einem Kraftstoffdampffilter erstreckt, wobei wenigstens ein Leitungsabschnitt über einen Anschlussfitting unmittelbar in das Einfüllrohr mündet. Dabei kann der erste und der zweite Leitungsabschnitt jeweils über einen Anschlussfitting unmittelbar in das Einfüllrohr münden.

Die US 4 934 417 A offenbart ein Verfahren zum Entlüften eines Doms eines Fahrzeugkraftstofftanks, wobei der Tank ein Einfüllrohr aufweist, das eine Kraftstoffpumpenzapfpistole während des Befüllens des Tanks aufnimmt und durch eine abnehmbare Kappe verschlossen ist, wobei das Verfahren die Schritte umfasst: Bereitstellen eines Entlüftungsweges, der von dem Dom zu einer Dampfauffangvorrichtung führt; Öffnen des Entlüftungsweges, wenn die Kappe angebracht ist, wenn der Druck in dem Dom über einen Schwellenwert ansteigt, und Schließen des Entlüftungsweges, wenn der Druck in dem Dom unter den Schwellenwert fällt; Öffnen des Entlüftungsweges unabhängig von dem Druck in dem Dom, wenn die Kappe entfernt ist und eine Kraftstoffzapfpistole nicht in das Einfüllrohr eingesetzt ist; und Schließen des Entlüftungsweges unabhängig von dem Druck in dem Dom, wenn die Kappe entfernt ist und eine Kraftstoffzapfpistole in das Einfüllrohr eingesetzt ist.

Aus der DE 196 05 922 A1 ist eine Entlüftungsvorrichtung für den Kraftstofftank eines Kraftfahrzeugs bekannt, mit einem Entlüftungskanal, der den sich im Kraftstofftank oberhalb des Kraftstoffs befindlichen Gasraum mit einem Aktivkohlefilter verbindet, und einem Sperrventil, das die Verbindung zwischen Gasraum und dem Aktivkohlefilter beim Betanken freigibt, wobei in dem Entlüftungskanal zusätzlich ein Kraftstoff-Abscheider angeordnet ist.

### Zusammenfassung der Erfindung

Es ist eine Aufgabe der Erfindung, eine Entlüftungsvorrichtung zur Entlüftung eines Kraftfahrzeugtanks anzugeben, die auch bei hohen Gasvolumenströmen zuverlässig funktioniert, dabei jedoch geringen Bauraum und geringe Herstellungskosten aufweist.

Die Lösung der Aufgabe erfolgt durch eine Entlüftungsvorrichtung zur Entlüftung eines Kraftfahrzeugtanks mit den Merkmalen gemäß Anspruch 1.

Die Entlüftungsvorrichtung umfasst ein Einfüllrohr, eine Entlüftungsleitung die an einem ersten Ende mit dem Kraftfahrzeugtank fluidverbindbar ist und an einem dem ersten Ende entgegengesetzten zweiten Ende über einen in Einbaulage oben am Einfüllrohr liegenden Entlüftungszugang mit dem Einfüllrohr fluidverbunden ist, und eine Entgasungsleitung, die an einem ersten Ende über einen in Einbaulage oben am Einfüllrohr liegenden Entgasungsabgang mit dem Einfüllrohr fluidverbunden ist, ferner umfassend einen im Einfüllrohr angeordneten Führungsbogen, der so angeordnet und geformt ist, dass ein durch den Entlüftungszugang in das Einfüllrohr eintretender Dampf zwischen der Innenwand des Einfüllrohrs und dem Führungsbogen entlang des Umfangs des Einfüllrohrs geführt wird, so dass ein Gasanteil des eintretenden Dampfes durch den Entgasungsabgang entweicht und ein Flüssiganteil des eintretenden Dampfes durch das Einfüllrohr abfließt.

Erfindungsgemäß wird ein Gasstrom aus einer Entlüftungsleitung, insbesondere einer Betriebsentlüftungsleitung, zur Abscheidung der enthaltenen Flüssigkeit an ein Einfüllrohr geleitet, die Abscheidung erfolgt jedoch nicht in einem Anschlussnippel am Einfüllrohr, sondern im Einfüllrohr selbst. Das größere Volumen des Einfüllrohres wird daher als Arbeitsvolumen für die Abscheidung genutzt. Der Gasvolumenstrom wird dazu über die Entlüftungsleitung bis zu einem Entlüftungszugang am Einfüllrohr geführt, der in Einbaulage oben ausgebildet ist, so dass das Kraftstoffdampfgemisch in das Einfüllrohr fallen kann. Die Bewegung des Dampfes wird durch einen Führungsbogen, also ein Bauteil mit bogenförmigem Querschnitt, so geführt, dass der Dampf umfänglich, im wesentlichen kreisbogenförmig, durch den Querschnitt des Einfüllrohres, insbesondere Einfüllkopfes, strömt, wobei lediglich der Gasanteil des Dampfes aufsteigt, um über den daher ebenfalls in Einbaulage oben angeordneten Entgasungsabgang, also eine weitere Öffnung, und weiter über eine Entgasungsleitung zu strömen, um in Richtung eines Kraftstoffdampffilter, insbesondere Aktivkohlefilters, zu gelangen. Der flüssige Kraftstoff steigt entlang des durch den Führungsbogen vorgegebenen Strömungswegs nicht bis zum Entgasungsabgang auf und rinnt daher über das Einfüllrohr, in Richtung zum Kraftfahrzeugtank, ab.

Erfindungsgemäß sind der Entlüftungszugang und der Entgasungsabgang an einem gemeinsamen Anschlussnippel am Einfüllrohr ausgebildet.

Der Führungsbogen ist erfindungsgemäß am gemeinsamen Anschlussnippel ausgebildet. Insbesondere kann der Führungsbogen am Anschlussnippel befestigt sein, oder der Führungsbogen ist einstückig mit dem Anschlussnippel ausgebildet.

Aufgrund des hohen Arbeitsvolumens kann diese Entlüftungsvorrichtung auch bei hohen Gasvolumenströmen und hoher Flüssigkeitsmenge eine zuverlässige Abscheidung von flüssigem Kraftstoff erreichen und verwendet dabei Volumen und Bauteile des Einfüllrohres, so dass der zusätzliche Bauraum und die Herstellungskosten gering sind.

Die Begriffe "oben" und "unten" beziehen sich im Rahmen dieser Patentschrift auf die Richtung der Schwerkraft, so dass beispielsweise Flüssigkeit von "oben" nach "unten" fällt.

Bevorzugt sind an einer der Innenwand des Einfüllrohrs zugewandten Außenwand des Führungsbogens Rippen zur Flüssigkeitsabscheidung ausgebildet. Die Rippen können nur an einem Abschnitt des Führungsbogens ausgebildet sein, insbesondere nur auf einer, den eintretenden Dampf nach unten führenden, ersten Hälfte des Führungsbogens.

Der Querschnitt des Führungsbogens ist vorzugsweise im Wesentlichen U-förmig ausgebildet, oder O-förmig ausgebildet.

Der Führungsbogen kann mehrteilig ausgeführt sein.

Bevorzugt ist im Einfüllrohr am Entgasungsabgang eine Klappe angeordnet, so dass beim Einführen einer Zapfpistole in das Einfüllrohr die Klappe durch die Zapfpistole in einer Schließrichtung bewegt wird und somit der Entgasungsabgang während einer Betankung des Kraftfahrzeugtanks verkleinert oder geschlossen wird. Während der Betankung durch den Entlüftungszugang gelangender Dampf fließt daher vollständig, oder beispielsweise bis auf eine vordefinierte Menge, lediglich durch das Einfüllrohr ab.

Bevorzugt ist die Entgasungsleitung an einem dem ersten Ende entgegengesetzten zweiten Ende mit einem Flüssigkeitsabscheider und/oder mit einem Kraftstoffdampffilter, insbesondere einem Aktivkohlefilter, fluidverbunden. Besonders bevorzugt ist die Entgasungsleitung am zweiten Ende zunächst mit dem Flüssigkeitsabscheider und über den Flüssigkeitsabscheider mit dem Kraftstoffdampffilter, insbesondere dem Aktivkohlefilter, fluidverbunden. Das durch die Entgasungsleitung austretende Gas wird daher mittels eines weiteren, bevorzugt vom Einfüllrohr separaten Flüssigkeitsabscheiders nochmals weiterbehandelt, bevor es zum Aktivkohlefilter gelangt. Der Flüssigkeitsabscheider kann auch für eine weitere Aufgabe genutzt werden, insbesondere zum Abscheiden in einer getrennten Betankungsentlüftung.

Bevorzugt verbindet eine zweite Entlüftungsleitung, insbesondere eine Betankungsentlüftungsleitung, den Kraftfahrzeugtank unmittelbar mit dem Flüssigkeitsabscheider fluidleitend.

Besonders bevorzugt verbindet eine zweite Entgasungsleitung den Flüssigkeitsabscheider mit dem Kraftstoffdampffilter fluidleitend.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung einer erfindungsgemäßen Entlüftungsvorrichtung.
- Fig. 2: ist eine Teildarstellung, welche das Einfüllrohr der Entlüftungsvorrichtung gemäß Fig. 1 im Bereich des Anschlussnippels von oben zeigt.
- Fig. 3: ist eine Schnittansicht gemäß Schnitt A-A der Fig. 2.

### Detaillierte Beschreibung der Erfindung

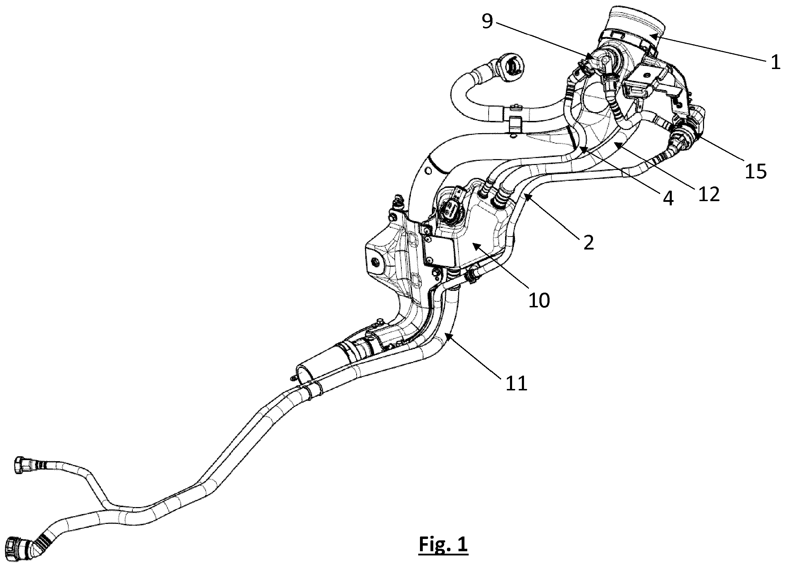

In Fig. 1 ist eine erfindungsgemäße Entlüftungsvorrichtung zur Entlüftung eines Kraftfahrzeugtanks, insbesondere eines Kraftstofftanks, dargestellt.

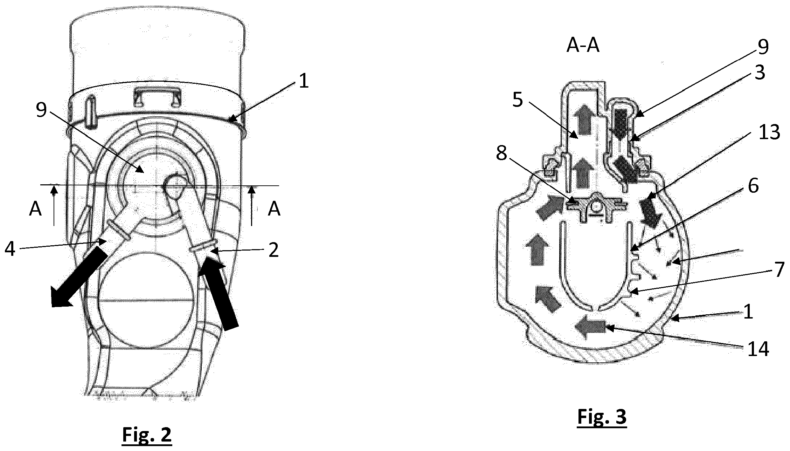

Die Entlüftungsvorrichtung umfasst ein Einfüllrohr 1, eine Entlüftungsleitung 2, nämlich eine Betriebsentlüftungsleitung, die an einem ersten Ende mit dem Kraftfahrzeugtank fluidverbindbar ist (in Fig. 1 unteres Ende der Entlüftungsleitung 2) und an einem dem ersten Ende entgegengesetzten zweiten Ende, stromabwärts einer Ventileinheit 15, über einen Anschlussnippel 9, an einem in Fig. 3 dargestellten Entlüftungszugang 3, mit dem Einfüllrohr 1 fluidverbunden ist.

Die Entlüftungsvorrichtung umfasst ferner eine Entgasungsleitung 4, als Rezirkulierleitung, die an einem ersten Ende über den selben Anschlussnippel 9, an einem in Fig. 3 dargestellten Entgasungsabgang 5, mit dem Einfüllrohr 1 fluidverbunden ist und die an einem dem ersten Ende entgegengesetzten zweiten Ende mit einem Flüssigkeitsabscheider 10, einer sogenannten "liquid trap" fluidverbunden ist. Der Entlüftungszugang 3 und der Entgasungsabgang 5 sind an dem gemeinsamen Anschlussnippel 9 am Einfüllrohr 1 ausgebildet.

Der Entlüftungszugang 3 liegt in Einbaulage oben am Einfüllrohr, so dass Dampf durch den Entlüftungszugang 3 in das Einfüllrohr 1 fallen kann. Auch der Entgasungsabgang 5 liegt in Einbaulage oben am Einfüllrohr 1, zumindest nicht in der Nähe des Bodens des Einfüllrohres 1, damit lediglich Gas bis zum Entgasungsabgang 5 gelangt, jedoch nicht flüssiger Kraftstoff.

Eine zweite Entgasungsleitung 12 verbindet den Flüssigkeitsabscheider 10 mit einem Kraftstoffdampffilter, insbesondere einem Aktivkohlefilter. In Fig. 1 (oben, links neben dem Anschlussnippel 9) ist hierzu lediglich das mit dem Kraftstoffdampffilter zu verbindende Ende der zweiten Entgasungsleitung 12 dargestellt, nicht das Kraftstoffdampffilter selbst.

Eine zweite Entlüftungsleitung 11, nämlich eine Betankungsentlüftungsleitung, die einen größeren Durchmesser aufweist als die Entlüftungsleitung 2, verbindet den Kraftfahrzeugtank unmittelbar mit dem Flüssigkeitsabscheider 10.

Der Anschlussnippel 9 ist im Detail in Fig. 2 näher dargestellt. Der in Fig. 2 eingezeichnete Schnitt A-A ist in Fig. 3 dargestellt.

Im Einfüllrohr 1 ist ein Führungsbogen 6 so angeordnet und geformt, dass ein durch den Entlüftungszugang 3 in das Einfüllrohr 1 eintretender Dampf, das mittels Pfeilen eingezeichnete, eintretende Kraftstoff-Gas-Gemisch 13, zwischen der Innenwand des Einfüllrohrs 1 und dem Führungsbogen 6 entlang des Umfangs des Einfüllrohrs 1 geführt wird, so dass ein Gasanteil des eintretenden Dampfes, eingezeichnet wieder durch Pfeile als Gas 14, durch den Entgasungsabgang 5 entweicht und ein Flüssiganteil des eintretenden Dampfes durch das Einfüllrohr 1 (in Fig. 3 in Richtung zum Betrachter) abfließt.

Der Führungsbogen 6 ist beispielsweise zylindersegmentförmig oder kegelsegmentförmig bzw. trichterförmig ausgebildet.

An einer der Innenwand des Einfüllrohrs 1 zugewandten Außenwand des Führungsbogens 6 sind abschnittsweise Rippen 7 zur Flüssigkeitsabscheidung ausgebildet.

Der Führungsbogen 6 ist im Wesentlichen als Profil mit U-förmigem Querschnitt ausgebildet oder mit O-förmigem Querschnitt ausgebildet.

Im Einfüllrohr 1 ist am Entgasungsabgang 5 eine Klappe 8 angeordnet, Die Klappe 8 ist axial verschiebbar gelagert. Beim Einführen einer Zapfpistole in das Einfüllrohr 1 wird die Klappe 8 durch die Zapfpistole in einer Schließrichtung bewegt und somit der Entgasungsabgang 5 während einer Betankung des Kraftfahrzeugtanks verkleinert oder geschlossen.

Der Führungsbogen 6 ist an seinen oberen Enden, den Enden der Schenkel der U-Form, am gemeinsamen Anschlussnippel 9 befestigt. Der Führungsbogen 6 kann auch den Ventilsitz für die Klappe 8 ausbilden.

### Bezugszeichenliste

- 1: Einfüllrohr
- 2: Entlüftungsleitung
- 3: Entlüftungszugang
- 4: Entgasungsleitung
- 5: Entgasungsabgang
- 6: Führungsbogen
- 7: Rippen
- 8: Klappe
- 9: Anschlussnippel
- 10: Flüssigkeitsabscheider
- 11: zweite Entlüftungsleitung
- 12: zweite Entgasungsleitung
- 13: Kraftstoff-Gas-Gemisch
- 14: Gas
- 15: Ventileinheit

## Patentansprüche

1. Entlüftungsvorrichtung zur Entlüftung eines Kraftfahrzeugtanks, umfassend ein Einfüllrohr (1), eine Entlüftungsleitung (2) die an einem ersten Ende mit dem Kraftfahrzeugtank fluidverbindbar ist und an einem dem ersten Ende entgegengesetzten zweiten Ende über einen in Einbaulage oben am Einfüllrohr (1) liegenden Entlüftungszugang (3) mit dem Einfüllrohr (1) fluidverbunden ist, wobei der Entlüftungszugang (3) am Einfüllrohr (1) in Einbaulage oben ausgebildet ist, so dass das Kraftstoffdampfgemisch in das Einfüllrohr (1) fallen kann, und eine Entgasungsleitung (4), die an einem ersten Ende über einen in Einbaulage oben am Einfüllrohr (1) liegenden Entgasungsabgang (5) mit dem Einfüllrohr (1) fluidverbunden ist, ferner umfassend einen im Einfüllrohr (1) angeordneten Führungsbogen (6), der so angeordnet und geformt ist, dass ein durch den Entlüftungszugang (3) in das Einfüllrohr (1) eintretender Dampf zwischen der Innenwand des Einfüllrohrs (1) und dem Führungsbogen (6) entlang des Umfangs des Einfüllrohrs (1) geführt wird, so dass ein Gasanteil des eintretenden Dampfes durch den Entgasungsabgang (5) entweicht und ein Flüssiganteil des eintretenden Dampfes durch das Einfüllrohr (1) abfließt, **dadurch gekennzeichnet, dass** der Entlüftungszugang (3) und der Entgasungsabgang (5) an einem gemeinsamen Anschlussnippel (9) am Einfüllrohr (1) ausgebildet sind, wobei der Führungsbogen (6) am gemeinsamen Anschlussnippel (9) ausgebildet ist.

2. Entlüftungsvorrichtung nach Anspruch 1,
**dadurch gekennzeichnet, dass** an einer der Innenwand des Einfüllrohrs (1) zugewandten Außenwand des Führungsbogens (6) Rippen (7) zur Flüssigkeitsabscheidung ausgebildet sind.

3. Entlüftungsvorrichtung nach zumindest einem der vorhergehenden Ansprüche,
**dadurch gekennzeichnet, dass** der Querschnitt des Führungsbogens (6) im Wesentlichen U-förmig ausgebildet ist oder O-förmig ausgebildet ist.

4. Entlüftungsvorrichtung nach zumindest einem der vorhergehenden Ansprüche,
**dadurch gekennzeichnet, dass** im Einfüllrohr (1) am Entgasungsabgang (5) eine Klappe (8) angeordnet ist, so dass beim Einführen einer Zapfpistole in das Einfüllrohr (1) die Klappe (8) durch die Zapfpistole in einer Schließrichtung bewegt wird und somit der Entgasungsabgang (5) während einer Betankung des Kraftfahrzeugtanks verkleinert oder geschlossen wird.

5. Entlüftungsvorrichtung nach zumindest einem der vorhergehenden Ansprüche,
**dadurch gekennzeichnet, dass** die Entgasungsleitung (2) an einem dem ersten Ende entgegengesetzten zweiten Ende mit einem Flüssigkeitsabscheider (10) und/oder mit einem Kraftstoffdampffilter, insbesondere einem Aktivkohlefilter, fluidverbunden ist.

6. Entlüftungsvorrichtung nach Anspruch 5,
**dadurch gekennzeichnet, dass** eine zweite Entlüftungsleitung (11) den Kraftfahrzeugtank unmittelbar mit dem Flüssigkeitsabscheider (10) fluidverbindet und eine zweite Entgasungsleitung (12) den Flüssigkeitsabscheider (10) mit dem Kraftstoffdampffilter fluidverbindet.

## Claims

1. Ventilation device for ventilating a motor vehicle tank, comprising a filler pipe (1), a ventilation line (2), which, at a first end, can be fluidically connected to the motor vehicle tank and, at a second end opposite the first end, is fluidically connected to the filler pipe (1) via a ventilation inflow (3) lying, wherein the ventilation inflow (3) on the filler pipe is configured in the installation position at the top of the filler pipe (1), so that the fuel vapour mixture can fall into the filler pipe and a degassing line (4), which, at a first end, is fluidically connected to the filler pipe (1) via a degassing outflow (5) lying, in the installation position, at the top of the filler pipe (1), further comprising a guide arc (6), which is disposed in the filler pipe (1) and is arranged and shaped such that a vapour passing through the ventilation inflow (3) into the filler pipe (1) is guided between the inner wall of the filler pipe (1) and the guide arc (6) along the periphery of the filler pipe (1), so that a gas component of the entering vapour escapes through the degassing outflow (5) and a liquid component of the entering vapour flows off through the filler pipe (1) **characterized in that** the ventilation inflow (3) and the degassing outflow (5) are configured on a common connecting nipple (9) on the filler pipe (1), wherein the guide arc (6) is configured on the common connecting nipple (9).

2. Ventilation device according to Claim 1,
**characterized in that** on an outer wall of the guide arc (6) that faces the inner wall of the filler pipe (1) are configured ribs (7) for separating off the liquid.

3. Ventilation device according to at least one of the preceding claims,
**characterized in that** the cross section of the guide arc (6) is of substantially U-shaped configuration or is of O-shaped configuration.

4. Ventilation device according to at least one of the preceding claims,
**characterized in that** in the filler pipe (1), at the degassing outflow (5), is arranged a flap (8), so that, when a fuel-pump nozzle is introduced into the filler pipe (1), the flap (8) is moved by the fuel-pump nozzle in a closing direction, and thus the degassing outflow (5), during a refuelling of the motor vehicle tank, is made smaller or closed.

5. Ventilation device according to at least one of the preceding claims,
**characterized in that** the degassing line (2), at a second end opposite the first end, is fluidically connected to a liquid separator (10) and/or to a fuel vapour filter, in particular an activated charcoal filter.

6. Ventilation device according to Claim 5,
**characterized in that** a second ventilation line (11) fluidically connects the motor vehicle tank directly to the liquid separator (10), and a second degassing line (12) fluidically connects the liquid separator (10) to the fuel vapour filter.

## Revendications

1. Dispositif d'aération d'un réservoir de véhicule automobile, comportant un tube de remplissage (1), une conduite d'aération (2) qui peut être reliée fluidiquement au réservoir de véhicule automobile à une première extrémité et est reliée fluidiquement au tube de remplissage (1) par le biais d'une entrée d'aération (3) située au niveau d'une partie supérieure du tube de remplissage (1) dans la position d'installation à une deuxième extrémité opposée à la première extrémité, l'entrée d'aération (3) étant réalisée au niveau de la partie supérieure du tube de remplissage (1) dans la position d'installation, de sorte que le mélange de vapeur de carburant puisse tomber dans le tube de remplissage (1), et une conduite d'aération (4) qui est reliée fluidiquement au tube de remplissage (1) par le biais d'une sortie d'aération (5) située au niveau de la partie supérieure du tube de remplissage (1) dans la position d'installation à une première extrémité, comportant en outre un coude de guidage (6) disposé dans le tube de remplissage (1), lequel coude est disposé et formé de telle sorte qu'une vapeur entrant dans le tube de remplissage (1) à travers l'entrée d'aération (3) soit guidée entre la paroi intérieure du tube de remplissage (1) et le coude de guidage (6) le long de la périphérie du tube de remplissage (1), de sorte qu'une partie gazeuse de la vapeur entrante s'échappe à travers la sortie d'aération (5) et qu'une partie liquide de la vapeur entrante s'écoule à travers le tube de remplissage (1), **caractérisé en ce que** l'entrée d'aération (3) et la sortie d'aération (5) sont réalisées sur un mamelon de raccordement commun (9) sur le tube de remplissage (1), le coude de guidage (6) étant réalisé sur le mamelon de raccordement commun (9).

2. Dispositif d'aération selon la revendication 1,
**caractérisé en ce que** des nervures (7) servant à la séparation de liquide sont réalisées sur une paroi extérieure du coude de guidage (6) tournée vers la paroi intérieure du tube de remplissage (1).

3. Dispositif d'aération selon au moins l'une des revendications précédentes,
**caractérisé en ce que** la section transversale du coude de guidage (6) est réalisée sensiblement en forme de U ou est réalisée en forme de O.

4. Dispositif d'aération selon au moins l'une des revendications précédentes,
**caractérisé en ce que** qu'un clapet (8) est disposé dans le tube de remplissage (1) au niveau de la sortie d'aération (5), de sorte qu'en cas d'insertion d'un pistolet de distribution dans le tube de remplissage (1), le clapet (8) soit déplacé par le pistolet de distribution dans une direction de fermeture et que la sortie d'aération (5) soit par conséquent réduite ou fermée pendant un remplissage du réservoir de véhicule automobile.

5. Dispositif d'aération selon au moins l'une des revendications précédentes,
**caractérisé en ce que** la conduite d'aération (2) est reliée fluidiquement à un séparateur de liquide (10) et/ou à un filtre de vapeur de carburant, en particulier à un filtre à charbon actif, à une deuxième extrémité opposée à la première extrémité.

6. Dispositif d'aération selon la revendication 5,
**caractérisé en ce qu'**une deuxième conduite d'aération (11) relie fluidiquement le réservoir de véhicule automobile directement au séparateur de liquide (10) et une deuxième conduite d'aération (12) relie fluidiquement le séparateur de liquide (10) au filtre de vapeur de carburant.
